# EUROPÄISCHE PATENTSCHRIFT

(11) **EP 1 306 294 B1**
(45) Veröffentlichungstag und Bekanntmachung des Hinweises auf die Patenterteilung: **05.01.2005**
(21) Anmeldenummer: 02023586.7
(22) Anmeldetag: 23.10.2002
(51) Int. Cl.: B62D 55/125, B62D 55/14

(54) **Radaufbau für Raupenantrieb und Raupenfahrzeug sowie Raupenantrieb und Raupenfahrzeug als solches**
Wheel assembly for crawler-type drive device and vehicle, as well as crawler-type drive and vehicle as such
Ensemble de roue pour dispositif d'entraînement à chenille et véhicule, et dispositif d'entraînement à chenille et véhicule

(30) Priorität: 25.10.2001 US 3892
(43) Veröffentlichungstag der Anmeldung: 02.05.2003
(73) Patentinhaber: DEERE & COMPANY, Moline, Illinois 61265-8098 (US)
(72) Erfinder: Smith, Eric Brian, Independence, IA 50644 (US); Rehmert, Craig Edward, Jesup, IA 50648 (US)
(74) Vertreter: Lau-Loskill, Philipp, Dipl.-Phys.

(56) Entgegenhaltungen:
- US-A- 3 512 598
- US-A- 4 235 270
- US-A- 5 288 143
- US-A- 5 785 395

## Beschreibung

Die Erfindung betrifft einen Radaufbau für ein Raupenantrieb, wobei der Radaufbau einen Radhauptkörper, einen Radzusatzkörper, einen aus einem oder mehreren Reifenkörpern bestehenden Reifen sowie einen ersten und einen zweiten Seitenflansch enthält. Des Weiteren betrifft die Erfindung einen Raupenkettenantrieb und ein Raupenfahrzeug mit einem derartigen Radaufbau.

Raupenantriebe für Raupenfahrzeuge enthalten eine Mehrzahl von Radaufbauten, die eine Raupenbahn definieren, wobei diese Bahn von der Raupenlaufbahn, im Folgenden auch Raupe genannt, durchlaufen und dadurch das Fahrzeug entlang des Bodens bewegt wird. Ein derartiger Raupenantrieb kann beispielsweise ohne Einschränkungen, auf jeder Seite des Fahrzeugs einen Antriebsradaufbau (z. B. im hinteren Bereich des Fahrzeugs), einen Laufradaufbau (z. B. im vorderen Bereich des Fahrzeugs) und einen oder mehrere mittlere Leitradaufbauten, die den Bodenkontakt der Raupe zwischen dem Antriebsradaufbau und dem Laufradaufbau unterstützen, enthalten.

Ein solcher Radaufbau wird z.B. in Dokument US 5 785 395 offenbart.

Bei einigen Ausführungen enthalten derartige Raupenantriebe als zusätzliche Elemente einen oder mehrere gesondert ausgebildete Spannradaufbauten, z. B. in einem oberen Bereich der Raupenbahn. Bei anderen Ausführungen ist die Spannfunktion zusätzlich zu der eigentlichen Primärfunktion des entsprechenden Radaufbaus in den Arbeitsvorgang eines oder mehrerer der anderen Radaufbauten als Sekundärfunktion integriert.

Die Strukturen der verschiedenen Radaufbauten sind normalerweise entsprechend der jeweiligen Einsatzfälle, für die jeder solcher Radaufbau vorgesehen ist, ausgestaltet und ausgelegt. Folglich sind Antriebsradaufbauten entsprechend ihrer Antriebsfunktion ausgelegt.

Laufradaufbauten sind entsprechend ihrer Funktion ausgelegt, nämlich um erhebliche Umschlingungswinkel der Raupe umzusetzen. Sie sind normalerweise derart ausgebildet, dass sie die Funktionen betreffend einer Steuerung der Bewegungsrichtung des Fahrzeugs ausführen oder unterstützen können. Da die Laufradaufbauten an einem gegebenen Fahrzeug üblicherweise nicht die Antriebsbelastungen des Fahrzeugs aufnehmen, sind die Laufradaufbauten normalerweise weniger komplex und möglicherweise weniger robust als die Antriebsradaufbauten ausgebildet.

Mittlere Leitradaufbauten sind ausgelegt und montiert, um eine abwärtsgerichtete Unterstützung der darunter liegenden Raupe zu leisten, und können daher zu diesem Zweck mit einer Federkraft beaufschlagt sein. Mittlere Leitradaufbauten üben üblicherweise keine antreibenden oder steuernden Funktionen aus.

Ähnlich dazu sind Spannradaufbauten, die in den Figuren dieser Offenbarung nicht dargestellt sind, dahingehend ausgelegt, um eine normalerweise aufwärts gerichtete Unterstützung der Raupe zu leisten und sind daher auch üblicherweise ausgelegt, mit einer Federkraft vom Fahrzeugrahmen beaufschlagt zu werden. Wie die mittleren Leitradaufbauten üben auch Spannradaufbauten üblicherweise keine antreibenden oder steuernden Funktionen aus.

Während die Antriebsradaufbauten und/oder die Laufradaufbauten antreibende und steuernde Funktionen ausüben und normalerweise relativ robust und möglicherweise komplexer ausgebildet sind, haben mittlere Leitradaufbauten und Spannradaufbauten normalerweise weniger anspruchsvolle Funktionen auszuüben und sind daher um einiges weniger robust und möglicherweise einfacher im Design ausgebildet.

Eine Vielzahl von Spurbreiten werden bei dem Einsatz von Raupenfahrzeugen eingesetzt. Die übliche Vorgehensweise bei der Auslegung von Raupenlaufwerken für die Serienfertigung solcher Fahrzeuge besteht darin, Räder bereitzustellen, die eine einzige gebräuchliche Breite in allen Fahrzeugen aufweisen, unabhängig von der Spurbreite, mit der ein Fahrzeug bestückt wird. Auf der anderen Seite wird die Spurbreite üblicherweise auf Basis des zu erwartenden Gebrauchs festgelegt, für den das jeweilige Fahrzeug eingesetzt werden soll. Ein Beispiel für einen Einflussfaktor, der üblicherweise maßgebend für die Festlegung der Spurbreite herangezogen wird, ist die Trageigenschaft des Untergrunds, auf dem das Fahrzeug eingesetzt wird. Ein weiterer Einflussfaktor ist die Projekt- oder Einsatzvorgabe hinsichtlich Beschränkungen der Untergrundverdichtung, wie beispielsweise des Erdreiches. Noch ein weiterer Einflussfaktor sind die Traktionseigenschaften des Untergrunds.

Daher ist beispielsweise ein Fahrzeug für eine 0,203 m (8 Zoll) breite Raupe ausgelegt und konstruiert, obwohl einige Benutzer derartiger Fahrzeuge, die Bestückung mit Raupenbreiten von beispielsweise 0,304 m, 0,406 m, 0,610 m (12-Zoll, 16-Zoll, 24-Zoll) oder mehr benötigen. Die konventionelle Vorgehensweise in einem solchen Fall ist, die für eine kleinere Spurbreite (beispielsweise 0,203 m bzw 8-Zoll) vorgesehenen Räder beizubehalten und die breiteren Raupen auf diese Räder zu montieren. In jedem Fall kann auf diese Weise nicht der volle Nutzen einer breiteren Raupe ausgenutzt werden. Bei dem Einsatz einer 0,406 m (16-Zoll) Raupe mit 0,203 m (8-Zoll) Rädern wird beispielsweise der innere Bereich der Raupe über eine Breite von 0,203 m (8-Zoll) durch die Räder abgestützt, wohingegen die verbleibenden äußeren 0,203 m (8-Zoll) der Raupe nur durch den inneren abgestützten Bereich der Raupe gehalten werden.

Eine derartige freitragende Anordnung der restlichen Raupenbreite kann zu leichten Verwindungen der Raupe führen und des Weiteren in der Raupe einen über die Raupenbreite ungleichmäßig verteilten Druck auf den Untergrund, beispielsweise auf das Erdreich, ausüben, indem beispielsweise äußere, nicht abgestützte Bereiche der Raupe einen relativ geringen Druck und innere abgestützte Bereiche der Raupe einen relativ großen Druck auf den Untergrund ausüben. Derartige ungleichmäßige Druckverteilungen gefährden teilweise die oben genannten Zielsetzungen einer Raupenausführung, nämlich eine Verminderung der Bodenverdichtung, eine erhöhte Traktion, eine verbesserte Gewichtsverteilung und dergleichen.

Die der Erfindung zugrunde liegende Aufgabe wird darin gesehen, einen Radaufbau für ein Raupenkettenantrieb der eingangs genannten Art sowie ein Raupenkettenantrieb und ein Raupenfahrzeug als solches anzugeben, durch welches die vorgenannten Probleme überwunden werden. Insbesondere soll ein Radaufbau geschaffen werden, durch den die Raupe auf unebenen Oberflächen, bei denen Raupenfahrzeuge normalerweise eingesetzt werden, auf alle Bereiche des Erdreiches, oder einer anderen Oberfläche über die das Fahrzeug fährt, einen gleichmäßig verteilten Druck ausübt. Des Weiteren besteht die Aufgabe darin, die Raupe so weit wie möglich flach ausgerichtet betreiben zu können, so dass Verwindungen der Raupe ausbleiben. Des weiteren besteht die Aufgabe darin, einen Radaufbau zu schaffen, der entsprechend angepasst werden kann und mit dem es möglich ist, Raupen aufzunehmen und vollständig abzustützen, die breiter ausgebildet sind, als Raupen die eine entsprechend einer Standardausrüstung vorgesehene Raupenbreite aufweisen. Ferner ist es Aufgabe der Erfindung, ein Raupenlaufwerk mit wenigstens einem solchen Radaufbau zu schaffen und des Weiteren ein Raupenfahrzeug vorzusehen, das den Einsatz eines Raupenlaufwerks mit einem solchen Radaufbau ermöglicht.

Die Aufgabe wird erfindungsgemäß durch die Lehre eines der Patentansprüche 1, 13 oder 14 gelöst. Weitere vorteilhafte Ausgestaltungen und Weiterbildungen der Erfindung gehen aus den Unteransprüchen hervor.

Erfindungsgemäß enthält ein Radaufbau für ein Raupenkettenantrieb der eingangs genannten Art ein Rad mit einem Radhauptkörper, der eine erste Drehachse enthält. An dem Radhauptkörper ist ein innerer Flansch ausgebildet, der eine zentrale Öffnung aufweist, mit der der Radhauptkörper an eine Achse zur Rotation des Rades um eine solche Achse und um die erste Drehachse montierbar ist. Ein äußerer Flansch des Radhauptkörpers enthält sich gegenüberliegende rechte und linke Seitenflächen, die eine erste Breite W1 der äußeren Fläche begrenzen, sowie eine erste Innenfläche und eine erste Außenfläche. Des weiteren enthält der Radhauptkörper einen Steg, der den inneren und äußeren Flansch miteinander verbindet, wobei der äußere Flansch sich über die gesamte erste Breite W1 zwischen der rechten und linken Seitenfläche erstreckt. Der Steg kann beispielsweise als Radscheibe ausgebildet sein oder mehrere Speichen umfassen. Der Radaufbau enthält des Weiteren einen ringförmig ausgebildeten Radzusatzkörper der eine zweite Innenfläche, eine zweite Außenfläche, gegenüberliegende linke und rechte Zusatzseitenflächen und eine zweite Breite W3 der äußeren Fläche zwischen der linken und rechten Zusatzseitenfläche aufweist. Der Radzusatzkörper ist mit der rechten Zusatzseitenfläche an die linke Seitenfläche des Radhauptkörpers lösbar montierbar, so dass dort eine Verbindungsstelle geschaffen wird. Durch die Kombination aus den Breiten W1 und W2 des Radhauptkörpers und des Radzusatzkörpers wird eine Gesamtbreite der äußeren Fläche des Rades definiert, wobei die Gesamtbreite wenigstens ca. 30% größer ist als die erste Breite W1 und wobei der Radzusatzkörper einen zweiten Drehpunkt besitzt, der axial zu dem ersten Drehpunkt ausgerichtet ist.

Die erste und zweite Außenfläche des Radhauptkörpers bzw. des Radzusatzkörpers enthalten einen im Wesentlichen gemeinsamen Durchmesser und bilden bzw. definieren miteinander kombiniert eine äußere Fläche des Rades. Die äußere Fläche des Rades enthält einen mittleren Bereich und sich gegenüberliegende Endbereiche, die an der äußeren Seitenfläche des Radhauptkörpers bzw. an der äußeren Zusatzseitenfläche des Radzusatzkörpers gelegen sind.

Des Weiteren enthält der Radaufbau einen Reifen, bestehend aus einem oder mehreren Reifenkörpern. Der Reifen bzw. Reifenkörper enthält eine Reifenaußenkontur, die eine innere Fläche, eine äußere Fläche und rechte und linke Seitenflächen, die sich im Wesentlichen von der äußeren Fläche zur inneren Fläche erstrecken aufweist. Des Weiteren enthält der Reifen mehrere Drähte, die nahe der inneren Fläche des Reifens angeordnet und in ein elastomeres Reifenmaterial eingebettet sind, wobei die Drähte miteinander kombiniert effektiv eine radiale Ausdehnung des Reifens beschränken. Im Rahmen der vorliegenden Erfindung sollen unter dem Begriff Draht neben einzelnen Stabelementen auch aus mehreren Elementen bestehende Seile und dergleichen fallen.

Die äußere Fläche des Rades nimmt dabei die innere Fläche des Reifenkörpers bzw. der Reifenkörper auf, wodurch eine Rad-Reifen-Grenzfläche definiert wird.

Der Radhauptkörper enthält an der rechten Seitenfläche einen ersten Seitenflansch, der eine erste Stützwand ausbildet.

Der Radzusatzkörper enthält an der linken Zusatzseitenfläche einen zweiten Seitenflansch, wobei sich der zweite Seitenflansch ausgehend von der zweiten Außenfläche des Rades zu einem weiter außen liegenden Rand innerhalb der äußeren Fläche des Reifens erstreckt und der zweite Seitenflansch eine zweite Stützwand ausbildet, die ausgehend von der linken Zusatzseitenfläche nach innen gerichtet ist.

Ähnlich zum zweiten Seitenflansch ist der erste Seitenflansch ausgebildet, der sich ausgehend von der Außenfläche des Rades zu einem weiter außen liegenden Rand innerhalb der äußeren Fläche des Reifens erstreckt. Bei einer derartigen Ausbildung des Radaufbaus kann der Reifenkörper über die Außenfläche des Radhauptkörpers geschoben werden und wird auf einer Seite durch den ersten Seitenflansch abgestützt. Auf der anderen Seite wird der Radzusatzkörper montiert, der mit dem zweiten Seitenflansch an der gegenüberliegenden Seitenfläche des Reifens angreift und die nach außen gerichtete Seitenfläche des Reifens abstützt. Der Reifen wird so zwischen dem ersten und zweiten Seitenflansch eingeschlossen und auf dem Rad gehalten. Die in den Reifen eingeformten Drähte verstärken den Reifen dahingehend, dass er durch einwirkende Kräfte nicht über die Seitenflansche hinaus geschoben werden kann. Der Radaufbau weist somit einen relativ einfachen Aufbau auf, der im Wesentlichen durch einen Radhauptkörper, bestehend aus einem inneren Flansch, einem äußeren Flansch und einem beide Flansche verbindenden Steg, durch einen Radzusatzkörper, durch einen ersten im äußeren Flansch des Radhauptkörpers enthaltenen Seitenflansch, durch einen zweiten am Radzusatzkörper enthaltenen Seitenflansch und durch einen zwischen den Seitenflanschen angeordneten Reifen ausgebildet ist.

In einer besonders bevorzugten Ausgestaltung der Erfindung enthält die erste und die zweite Außenfläche des Radhauptkörpers bzw. des Radzusatzkörpers, beidseits von der Verbindungsstelle, einen im Wesentlichen konstanten Außendurchmesser. Der mittlere Bereich der Außenfläche weist einen relativ kleinen Durchmesser, einen sogenannten Kleindurchmesserbereich auf. Hingegen weisen die sich gegenüberliegenden Endbereiche davon abweichend einen relativ großen Durchmesser, einen sogenannten Großdurchmesserbereich auf. Somit liegt der erste Seitenflansch an einer ersten Seitenfläche innerhalb des äußeren Flansches des Rades und weist einen zweiten Durchmesser auf, der größer ist als der kleinere erste Durchmesser. Die vom ersten Seitenflansch geformte erste Stützwand ist dabei in Richtung eines mittleren Bereichs der äußeren Fläche des Rades gerichtet.

Der Betragsunterschied zwischen dem ersten und dem zweiten Durchmesser ist dabei größer als die radiale Ausdehnung der Kombination aus Drähten und elastomerem Material im Reifen, so dass seitliche Verschiebungen des Reifens auf dem Rad bei montiertem Radzusatzkörper verhindert werden.

Die erste und zweite Stützwand des ersten bzw. zweiten Seitenflanschs stützen die erste bzw. zweite Seitenfläche des Reifens ab, so dass effektiv seitliche Bewegungen des Reifens bei an den Radhauptkörper montierten Radzusatzkörper verhindert werden, und dass bei Demontage des Radzusatzkörpers vom Radhauptkörper die Abstützfunktion aufgehoben wird. Bei demontiertem Radzusatzkörper kann der Reifen seitlich vom Rad gelöst und anschließend ein neuer Reifen auf die äußere Fläche des Rades aufgezogen werden. Danach wird der Radzusatzkörper erneut lösbar an den Radhauptkörper montiert, so dass der neue Reifen sicher im Radaufbau fixiert wird

In einer besonders bevorzugten Ausgestaltung der Erfindung weist der Reifen zwischen der inneren Fläche des Reifens und einer der beiden Seitenflächen des Reifens eine erste Vertiefung auf, wobei die Vertiefung eine zur Seite ausgerichtete Stützfläche formt. Die Stützfläche der Vertiefung wird durch die erste oder zweite Stützwand des ersten bzw. zweiten Seitenflanschs abgestützt, wodurch seitliche Bewegungen des Reifens relativ zum Rad verhindert werden.

In einer weiteren besonders bevorzugten Ausgestaltung der Erfindung weist der Reifen zwischen der inneren Fläche des Reifens und den beiden Seitenflächen des Reifens eine erste und eine zweite Vertiefung auf, wobei die Vertiefungen eine erste bzw. eine zweite zur Seite ausgerichtete Stützfläche formen und beide Seitenflansche jeweils durch ihre Stützwände die zur Seite ausgerichteten Stützflächen der Vertiefungen abstützen. Dadurch werden seitliche Bewegungen des Reifens relativ zum Rad verhindert.

Die Ausgestaltung mit zwei Vertiefungen, welche in Form von gegenüberliegenden Aussparungen an den Rändern der inneren Fläche des Reifenäußeren ausgebildet sind, hat den Vorteil, dass die äußere Fläche des Reifens sich über die gesamte Breite des Radaufbaus erstrecken kann, ohne dass ein Seitenflansch über die Reifenseitenfläche hinausragt. Auf diese Weise kann der Radaufbau universell, beispielsweise als Laufrad, mittleres Leitrad oder auch als Spannrad bzw. Spannrolle, eingesetzt werden.

Vorzugsweise erstreckt sich die äußere Fläche des Reifens über die gesamte Breite des Radaufbaus. Dadurch wird gewährleistet, dass der Reifen über die gesamte Breite des Radaufbaus wirken kann, wobei die am Reifenrand ausgebildeten Vertiefungen die Seitenflansche vollständig überdecken.

Durch den Radzusatzkörper in Kombination mit dem Radhauptkörper wird eine einfache Aufrüstung bzw. Umrüstung auf nicht standardmäßige, breitere Raupenlaufwerke realisiert. Die durch den Radzusatzkörper erweiterte Radfläche bewirkt, dass die auf die Raupe einwirkenden Kräfte und Belastungen über eine erweiterte Breite, vorzugsweise über eine an die Raupenbreite angepasste Breite wirken können und damit eine für Raupenlaufwerk und Untergrund, beispielsweise Erdgut, vorteilhafte Druckverteilung erzielt wird.

In einer bevorzugten Ausgestaltung der Erfindung ist der Reifen frei von Klebestoffen auf der Rad-Reifen-Grenzfläche. Dadurch wird eine einfach durchführbare Austausch- bzw. Auswechselprozedur geschaffen, ohne dass der Radaufbau vollständig vom Raupenlaufwerk entfernt werden muss.

Des Weiteren ist der Reifen frei von Befestigungsmitteln, die sich zur Fixierung des Reifens auf das Rad bzw. auf die Radkörper durch den Reifen erstrecken. Dadurch wird ein einfacher Aufbau des Reifens geschaffen, ohne dass der Reifen mit zusätzlichen Befestigungshülsen, Öffnungen, Bohrungen oder dergleichen versehen werden muss.

In einer bevorzugten Ausgestaltung der Erfindung erstreckt sich der Kleindurchmesserbereich des Rades vorzugsweise über wenigstens 70% entlang der Breite des Rades oder vorzugsweise über 80% entlang der Breite des Rades zwischen den Seitenflächen. Dadurch wird gewährleistet, dass eine möglichst große Rad-Reifen-Grenzfläche geschaffen wird und damit eine möglichst hohe Kraftübertragung zwischen Rad und Reifen stattfindet.

In einer bevorzugten Ausgestaltung der Erfindung ist der Radzusatzkörper mit Bohrungen versehen, die sich über die gesamte Breite durch den Radzusatzkörper erstrecken, wobei die Bohrungen Befestigungsmittel aufnehmen, mit denen der Radzusatzkörper an den Radhauptkörper lösbar befestigbar ist. Vorzugsweise ist dazu der Radhauptkörper mit Gewindebohrungen versehen, in die die Befestigungsmittel, beispielsweise Gewindebolzen, eingreifen und den Radzusatzkörper lösbar mit dem Radhauptkörper verbinden.

In einer bevorzugten Ausgestaltung der Erfindung ist der zweite Seitenflansch ein Bestandteil des Radzusatzkörpers und enthält angrenzend an eine Zusatzseitenfläche des Radzusatzkörpers einen relativ zur zweiten Außenfläche des Radzusatzkörpers größeren Zusatzgroßdurchmesserbereich. Ebenso ist es denkbar, dass der Radzusatzkörper den zweiten Seitenflansch als separates Bauteil aufnimmt, derart, dass der zweite Seitenflansch an den Radzusatzkörper angeflanscht bzw. befestigt wird.

Vorzugsweise sind der erste Seitenflansch und der zweite Seitenflansch ein Bestandteil der Radkörper, wobei erster und zweiter Seitenflansch angrenzend an eine rechte Seitenfläche des Radhauptkörpers bzw. eine linke Zusatzseitenfläche des Radzusatzkörpers einen relativ zur Außenfläche der Radkörper größeren Großdurchmesserbereich enthalten. Es ist jedoch möglich, dass beide oder einer der Radkörper den entsprechenden Seitenflansch als separates Bauteil aufnehmen, derart, dass der entsprechende Seitenflansch an den Radkörper angeflanscht bzw. befestigt wird.

In einer weiteren bevorzugten Ausgestaltung der Erfindung weist der Elastomer des Elastomerreifens bzw. der Reifenwerkstoff ein Kautschukgemisch auf. Der Kautschuk oder Gummi bietet den Vorteil, dass relativ hohe Reibkoeffizienten erzielt und hohe Dämpfungs- bzw. Federungseigenschaften sowie ein hohes Dehnungsvermögen gewährleistet werden kann. Ein hoher Reibkoeffizient wirkt sich dabei positiv auf die Kraftübertragung sowohl von Reifen zur Raupe als auch von Reifen aufs Rad aus, so dass ein Durchrutschen des Reifens vermieden wird. Die Dämpfungs- bzw. Federungseigenschaften wirken sich zum einen vorteilhaft gegenüber der Geräuschentwicklung des Raupenlaufwerks und gegenüber einem Dämpfungsmechanismus des Fahrzeugs bei Betrieb auf unebenem Terrain aus. Das hohe Dehnungsvermögen des Reifens ermöglicht eine optimale Anpassung des Reifens an die Außenfläche des Rades, so dass auch hohe Übertragungskräfte durch Schaffung entsprechender Übergangspassungen erzielt werden können.

In einer bevorzugten Ausgestaltung der Erfindung schließen die erste bzw. die zweite Stützwand mit den Kleindurchmesserbereichen der Außenflächen der Radkörper jeweils Winkel ein, die nicht größer als 135° und nicht kleiner als 45° sind, wobei jeweils ein Schenkel der Winkel von der entsprechenden Stützwand axial zur Mitte der Radkörper gerichtet ist. Vorzugsweise betragen die Winkel 90°, so dass die Stützwände senkrecht auf der Außenfläche der Radkörper liegen. Durch entsprechende Ausbildung der Winkel, d.h. durch entsprechende Ausformung der Vertiefungen und der Seitenflansche, kann der Reifen mehr oder weniger stark auf dem Rad fixiert werden, wobei die erforderlichen Grenzwinkel einzuhalten sind, da der Reifen bei zu großem Winkel über einen Seitenflansch rutschen bzw. bei zu kleinem Winkel die Tragfähigkeit der Seitenflansche nicht gegeben sein könnte.

Erfindungsgemäß wird des Weiteren ein Raupenantrieb bzw. ein Raupenkettenantrieb mit einer Antriebsmaschine, einer Raupe bzw. Raupenkette und einem Antriebsstrang vorgesehen, wobei die Raupe bzw. Raupenkette um eine Mehrzahl von Rädern montiert ist und der Antriebsstrang eine Antriebskraft von der Antriebsmaschine zu wenigstens einem Rad überträgt und wobei wenigstens eines der in der Raupe bzw. Raupenkette laufenden Räder einen erfindungsgemäßen Radaufbau aufweisen. Dadurch werden die vorausgehend genannten Vorteile der Erfindung auf einen Raupenantrieb bzw. Raupenkettenantrieb übertragen.

Ferner wird erfindungsgemäß ein Raupenfahrzeug vorgeschlagen, mit einem Rahmen, einer Antriebsmaschine, einem Raupenlaufwerk und einem Antriebsstrang. Der Antriebsstrang überträgt eine Antriebskraft von der Antriebsmaschine zum Raupenlaufwerk, wobei das Raupenlaufwerk eine Raupe bzw. Raupenkette und eine Mehrzahl von Rädern enthält, um die die Raupe bzw. Raupenkette montiert ist und wobei wenigstens eines der Räder einen erfindungsgemäßen Radaufbau enthalten. Dadurch werden die vorausgehend genannten Vorteile der Erfindung auf ein Raupenfahrzeug übertragen.

In einer besonders bevorzugten Ausgestaltung der Erfindung enthält das Raupenfahrzeug Radaufbauten, die ein mittleres Leitrad oder ein führendes Laufrad darstellen. Denkbar ist auch der Einsatz eines erfindungsgemäßen Radaufbaus als Spannrad oder Spannrolle innerhalb einer Raupe bzw. Raupenkette.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht eines erfindungsgemäßen landwirtschaftlichen Raupenfahrzeugs,
- Fig. 2: eine perspektivische Seitenansicht eines bei einem erfindungsgemäßen Raupenantrieb eingesetzten Radaufbaus,
- Fig. 3: eine Querschnittsansicht des neuartigen Radaufbaus des erfindungsgemäßen Raupenfahrzeugs entsprechend der Schnittebene 3-3 aus Fig. 2. und
- Fig. 4: eine Querschnittsansicht eines zweiten Ausführungsbeispiels des neuartigen Radaufbaus des erfindungsgemäßen Raupenfahrzeugs entsprechend der Schnittebene 3-3 aus Fig. 2. mit einem einteiligen Reifenkörper.

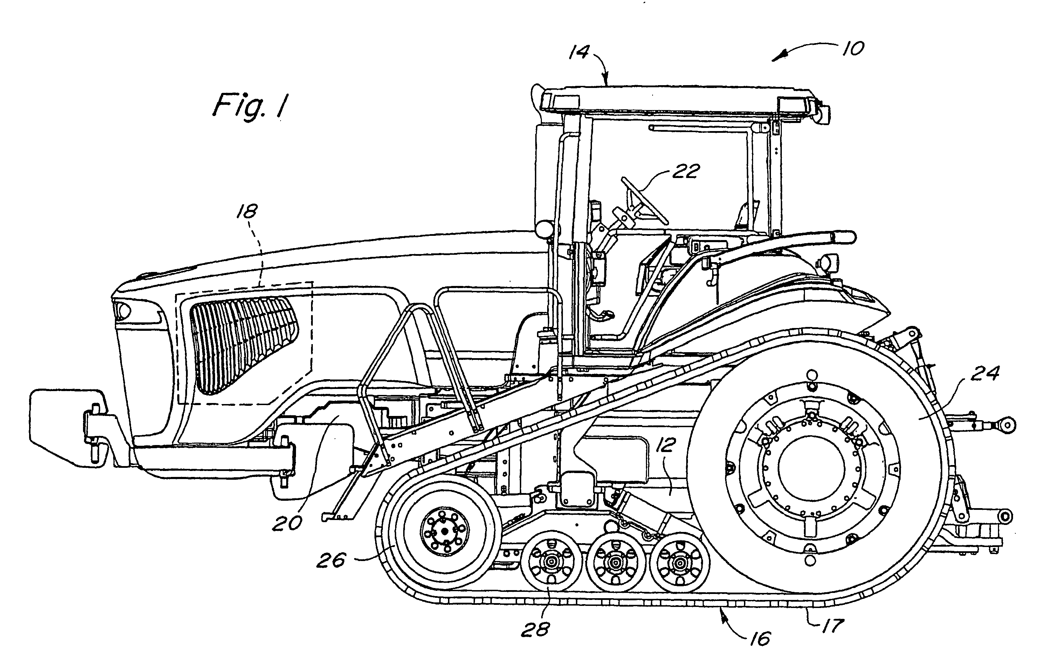

In Figur 1 ist ein spurgebundener landwirtschaftlicher Schlepper 10 dargestellt, mit einem Rahmen 12, einer Fahrerkabine 14, einem eine Raupe 17 enthaltenes Raupenlaufwerk 16, einem Motor 18, einem Antriebsstrang 20, der Antriebsleistung vom Motor zum Raupenlaufwerk überträgt und mit verschiedenen in der Kabine 14 befindlichen Bedienungselemente 22 zur Steuerung des Fahrbetriebs und anderer vom Schlepper ausgeführter Operationen.

Das sich auf der linken Seite des Schleppers befindliche abgebildete Raupenlaufwerk enthält ein Antriebsrad 24, ein Laufrad 26 und mittlere Leiträder 28, von denen drei abgebildet sind. Ein gleichartiges komplementäres zweites Raupenlaufwerk 16 (nicht gezeigt) ist auf der rechten Seite des Schleppers 10 angeordnet, wobei beide Raupenlaufwerke 16 miteinander kombiniert zum Antreiben und zur Lenkung des Schleppers 10 eingesetzt werden.

Die Antriebsräder 24 werden zum Antrieb des Schleppers 10 genutzt und dienen normalerweise der Lenkung des Schleppers 10 als auch der Abstützung des Schleppers 10 gegenüber dem Boden. Die Antriebsräder 24 sind üblicherweise robuster, größer und komplexer sowohl als die Laufräder 26 als auch als die mittleren Leiträder 28 ausgebildet.

Die Laufräder 26 sind üblicherweise größer als die mittleren Leiträder 28 ausgebildet, damit sie den Spannungen, die zum einen beim Lenken an den Laufrädern 26 auftreten und die zum anderen durch die Umlenkung der Raupe 17 um nahezu (jedoch weniger) 180° verursacht werden, standhalten. Dementsprechend müssen die Laufräder 26 einigermaßen robust ausgebildet sein, sie stellen jedoch keine am Antrieb des Schleppers 10 beteiligte Komponente dar, weshalb die Laufräder 26 normalerweise weniger robust als die Antriebsräder 24 ausgebildet sind.

Die mittleren Leiträder 28 sind zwischen dem Antriebsrad 24 und dem dazugehörigen Laufrad 26 angeordnet und stützen den Rahmen 12 gegenüber der Raupe 17 derart ab, dass die effektive Bodenkontaktfläche, mit der sich der Schlepper durch die Raupe auf dem Boden abstützt, vergrößert wird, um dadurch eine durch den Schlepper verursachte Bodenbelastung und Bodenkompression in Grenzen zu halten.

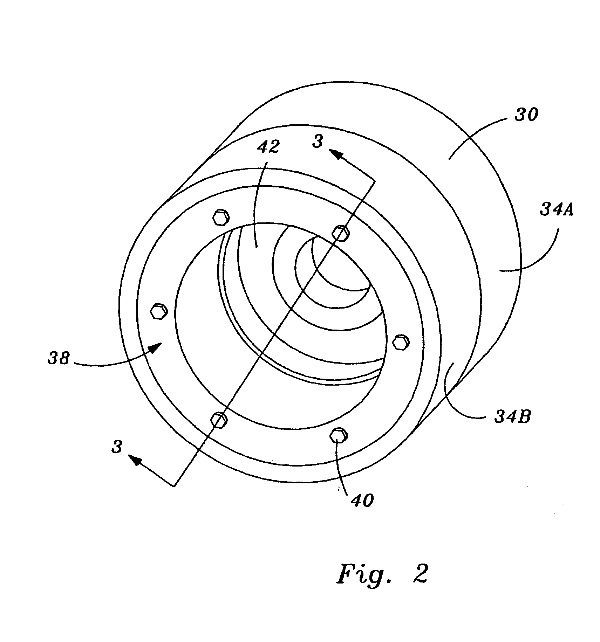

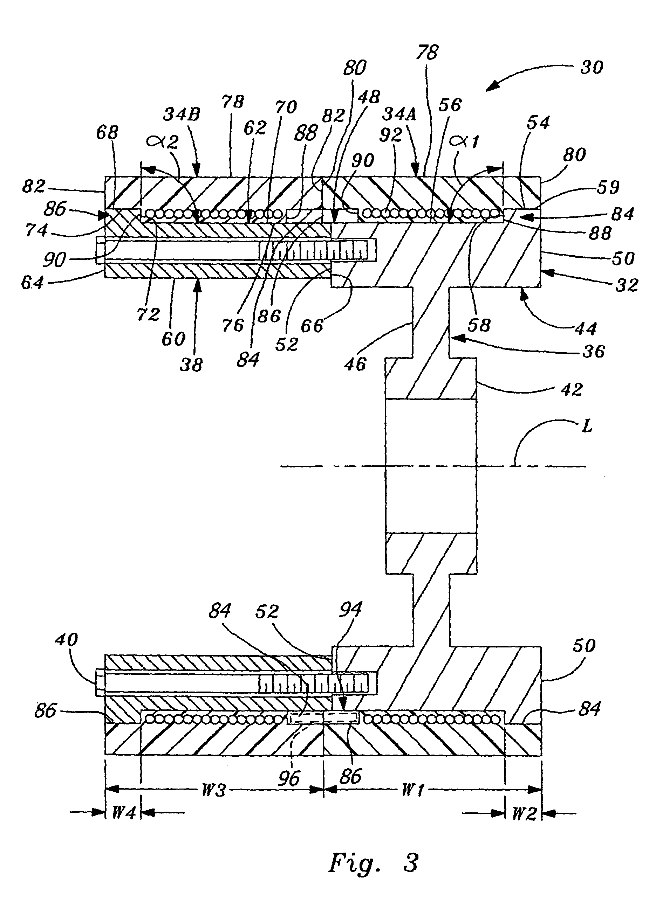

Die Figuren 2 und 3 zeigen einen Radaufbau 30 mit einem Rad 32 und einem Paar Reifenkörper 34A und 34B. Das Rad 32 enthält einen Radhauptkörper 36 und einen Radzusatzkörper 38. Der Radzusatzkörper 38 ist lösbar an den Radhauptkörper mit mehreren Haltebolzen 40 montiert.

Der Radhauptkörper 36 enthält einen inneren Flansch 42, zur Verbindung mit einer Radnabe (nicht gezeigt), einen äußeren Flansch 44 und einen Steg 46, der den inneren Flansch 42 mit dem äußeren Flansch 44 verbindet.

Der innere Flansch 42 formt üblicherweise eine zylindrische Öffnung, die eine Radnabe, eine Achse oder dergleichen aufnimmt. Die Ausbildung des inneren Flansches 42 ist normalerweise nicht entscheidend für die Funktionalität der Erfindung, demzufolge verschiedenste Ausbildungen für den inneren Flansch 42 bei dieser Erfindung eingesetzt werden können.

Die Ausbildung des Steges 46 ist normalerweise nicht entscheidend für die Funktionalität der Erfindung, demzufolge kann der Steg 46 beispielsweise als Radscheibe ausgebildet sein, aus Speichen bestehen oder auf jede andere bekannte Art ausgestaltet sein.

Die Ausbildung des Radhauptkörpers 36 am äußeren Flansch 44 und die Verwendung eines Radzusatzkörpers 38 im Aufbau des Rades 32 sind entscheidend für die Erfindung. Wie aus Fig. 2 und 3 zusammen hervorgeht, enthält der äußere Flansch 44 des Radhauptkörpers 36 eine Außenfläche 48, deren Durchmesser im Wesentlichen den Durchmesser der äußeren Oberfläche des Rades 32 bildet. Der äußere Flansch 44 des Radhauptkörpers 36 enthält des Weiteren eine rechte Seitenfläche 50 und eine gegenüberliegende linke Seitenfläche 52 und eine erste Breite W1 zwischen der rechten und linken Seitenfläche 50, 52.

Die Außenfläche 48 enthält einen ersten Bereich 54 mit größerem Durchmesser (Großdurchmesserbereich) und einen zweiten Bereich 56 mit kleinerem Durchmesser (Kleindurchmesserbereich). Wie in Fig. 3 zu sehen ist, erstreckt sich der Großdurchmesserbereich 54 entsprechend der Ausdehnung der rechten Seitenfläche 50 nach außen und ausgehend von der äußeren Kante der rechten Seitenfläche 50 nach links. Dabei wird ein Teil der Außenfläche 48 des äußeren Flanschs 44 gebildet. Der Großdurchmesserbereich 54 erstreckt sich über eine zweite Breite W2, die weniger als 40% der ersten Breite W1 der Außenfläche 48 des äußeren Flansches 44 beträgt. Normalerweise erstreckt sich der Großdurchmesserbereich 54 über ca. 10% bis ca. 30%, vorzugsweise über ca. 20% bis ca. 25% der Breite des Rades 32. Dementsprechend deckt der Kleindurchmesserbereich 56 der Außenfläche 48 des äußeren Flanschs 44 des Radhauptkörpers 36 im Wesentlichen wenigstens 60% und bis zu ca. 90%, vorzugsweise ca. 70% bis ca. 80%, insbesondere ca. 75% der ersten Breite W1 der Außenfläche 48 ab.

Am linken Ende des Großdurchmesserbereichs 54, wie in Fig. 3 dargestellt ist, erstreckt sich die Außenfläche 48 des äußeren Flanschs 44 in einem rechten Winkel α1 nach innen, hin zum Kleindurchmesserbereich 56 und bildet eine Stützwand 58. Ein Schenkel des Winkels α1 ist zwischen der Stützwand 58 und einem mittleren Bereich der Außenfläche 48 des äußeren Flanschs 44 gelegen, wobei die Stützwand 58 in Kontakt mit dem ersten Reifenkörper 34A tritt, wie nachstehend näher beschrieben ist. Die oben beschriebene Ausbildung des Großdurchmesserbereichs 54 der Außenfläche 48 definiert gewissermaßen einen ersten Seitenflansch 59 der einteilig mit dem äußeren Flansch 44 des Radhauptkörpers 36 ausgebildet ist, wobei der Seitenflansch 59 teilweise durch die rechte Seitenfläche 50 des äußeren Flanschs 44 und teilweise durch die Außenfläche 48 des äußeren Flanschs 44 definiert ist. Auf Wunsch kann der Großdurchmesserbereich 54 auch Bereiche mit größeren und/oder kleineren Durchmessern längs der Breite zwischen der Stützwand 58 und der rechten Seitenfläche 50 enthalten. Derartige Variationen beinhalten Durchmesser, die größer sind, als der nominelle Durchmesser des Kleindurchmesserbereichs 56.

Der innere Teil der Stützwand 58 schneidet den Kleindurchmesserbereich 56 der Außenfläche 48. Der Kleindurchmesserbereich 56 erstreckt sich von der Stützwand 58 bis hin zu der linken Seitenfläche 52 des äußeren Flanschs 44. In dem gezeigten Ausführungsbeispiel ist der Kleindurchmesserbereich 56 mit einem konstanten Durchmesser versehen und erstreckt sich ohne Unterbrechung bis hin zur linken Seitenfläche 52. Bei Bedarf kann der Kleindurchmesserbereich 52 auch Bereiche mit größeren und/oder kleineren Durchmessern zwischen der Stützwand 58 und der linken Seitenfläche 52 enthalten. Derartige Variationen beinhalten Durchmesser, die kleiner sind, als der nominelle Durchmesser des Großdurchmesserbereichs 54.

Wie in Fig. 3 dargestellt enthält der Radzusatzkörper 38 einen ringförmigen Aufbau, durch den eine Zusatzinnenfläche 60, eine Zusatzaußenfläche 62, linke und rechte gegenüberliegende Zusatzseitenflächen 64, 66 und eine dritte Breite W3 zwischen den Zusatzseitenflächen 64, 66 definiert werden. Der Radzusatzkörper 38 ist lösbar durch Gewindebolzen 40 an den Radhauptkörper 36 montiert, wobei die rechte Zusatzseitenfläche 66 an der linken Seitenfläche 52 des Radhauptkörpers 36 anliegt. Die Kombination von erster Breite W1 des Radhauptkörpers 36 und dritter Breite W3 des Radzusatzkörpers 38 definiert die Gesamtbreite des Rades entlang der äußeren Oberfläche, wobei die Gesamtbreite W3 wenigstens 30% größer ist als die erste Breite W1 der Außenfläche 48 des Radhauptkörpers 36.

Die Zusatzaußenfläche 62 enthält einen Bereich 68 größeren Durchmessers (Zusatzgroßdurchmesserbereich) und einen Bereich 70 kleineren Durchmessers (Zusatzkleindurchmesserbereich). Wie in Fig. 3 dargestellt ist, erstreckt sich der Zusatzgroßdurchmesserbereich 68 nach außen in Form einer Erweiterung der linken Zusatzseitenfläche 64 des Radzusatzkörpers 38, und ausgehend vom äußeren Ende der linken Zusatzseitenfläche 64 nach rechts, wodurch ein Bereich der zweiten Außenfläche 62 des Radzusatzkörpers definiert wird. Der Zusatzgroßdurchmesserbereich 68 besitzt eine Breite W4, die sich weniger als 40% entlang der Breite W3 des Radzusatzkörpers 38 erstreckt. Normalerweise erstreckt sich der Zusatzgroßdurchmesserbereich 68 über ca. 10% bis ca. 30%, vorzugsweise über ca. 20% bis ca. 25% der Breite des Radzusatzkörpers 38. In Fällen, in denen die dritte Breite W3 wesentlich geringer als die Breite W1 ist, ist der Bruchteil des Zusatzgroßdurchmesserbereichs 68 an der Breite W1 zu bemessen.

Dementsprechend deckt der Zusatzkleindurchmesserbereich 70 der zweiten Außenfläche 62 des Radhauptkörpers 36 im Wesentlichen wenigstens 60% und bis zu ca. 90%, vorzugsweise ca. 70% bis ca. 80%, insbesondere ca. 75% der dritten Breite W3 des Radzusatzkörpers 38 ab.

Ausgehend vom rechten Ende des Zusatzgroßdurchmesserbereichs 68 erstreckt sich die zweite Außenfläche 62 des Radzusatzkörpers 38 in einem rechten Winkel α2 in Richtung des Zusatzkleindurchmesserbereichs 70, so dass eine zweite Stützwand 72 ausgebildet wird. Ein Schenkel des Winkels α2 ist zwischen der Stützwand 72 und einem mittleren Bereich der zweiten Außenfläche 62 des Radzusatzkörpers 38 gelegen, wobei die Stützwand 72 in Kontakt mit dem zweiten Reifenkörper 34B tritt, wie im Folgenden näher beschrieben wird.

Die oben beschriebene Ausgestaltung des Zusatzgroßdurchmesserbereichs 68 an der zweiten Außenfläche 62 des Radzusatzkörpers 38 bildet gewissermaßen einen zweiten Seitenflansch 74, der in die zweite Außenfläche 62 des Radzusatzkörpers 38 integriert ist. Dabei ist der zweite Seitenflansch 74 teilweise durch die linke Zusatzseitenfläche 64 und teilweise durch die zweite Außenfläche 62 definiert wird. Bei Bedarf kann der Zusatzgroßdurchmesserbereich 68 auch Bereiche mit größeren und/oder kleineren Durchmessern zwischen der Stützwand 72 und der linken Zusatzseitenfläche 64 enthalten. Derartige Variationen enthalten im Wesentlichen Durchmesser, die größer sind, als der nominelle Durchmesser des Zusatzkleindurchmesserbereichs 70.

Der innere Teil der Stützwand 72 kreuzt den Zusatzkleindurchmesserbereich 70 der zweiten Außenfläche 62. Der Zusatzkleindurchmesserbereich 70 erstreckt sich von der Stützwand 72 bis hin zu der rechten Zusatzseitenfläche 66 des Radzusatzkörpers 38. In dem gezeigten Ausführungsbeispiel in Fig. 3 ist der Zusatzkleindurchmesserbereich 70 mit einem konstanten Durchmesser versehen und erstreckt sich ohne Unterbrechung bis hin zur rechten Zusatzseitenfläche 66. Auf Wunsch kann der Zusatzkleindurchmesserbereich 70 auch Bereiche mit größeren und/oder kleineren Durchmessern zwischen der Stützwand 72 und der rechten Zusatzseitenfläche 66 enthalten. Derartige Variationen enthalten Durchmesser, die kleiner sind, als der nominelle Durchmesser des Zusatzgroßdurchmesserbereichs 68.

Im Wesentlichen widerspiegelt und ergänzt die zweite Außenfläche 62 des Radzusatzkörpers 38 die Außenfläche 48 des Radhauptkörpers 36, wobei die Kleindurchmesserbereiche 56, 70 der Außenflächen 48, 62 des Radhauptkörpers 36 und des Radzusatzkörpers 38 im Wesentlichen eine gemeinsame Außenfläche des Rades 32 bilden und die Großdurchmesserbereiche 54, 68 des Radhauptkörpers 36 und des Radzusatzkörpers 38 entgegengesetzte rechte und linke Seitenflansche 59, 74 innerhalb des Radhauptkörpers 36 und des Radzusatzkörpers 38 bilden, wobei die beiden Seitenflansche 59, 74 üblicherweise spiegelsymmetrisch zueinander ausgebildet sind.

Im Gegensatz hierzu können die Seitenflansche 59, 74 auch verschiedene Ausbildungen besitzen. Zum Beispiel kann einer oder beide der Seitenflansche 59, 74 einen Aufbau aufweisen, der hinsichtlich des entsprechenden Radhauptkörpers 36 oder Radzusatzkörpers 38 als getrenntes Bauteil ausgebildet ist und durch Schrauben oder andere Befestigungsmittel an den entsprechenden Radkörper 36, 38 montiert wird (nicht gezeigt), wobei kein Großdurchmesserbereich 54, 68 an den Außenflächen 48, 62 vorgesehen ist.

Unabhängig von der Ausbildung der Seitenflansche 59, 74 und von der Gestaltung der Außenflächen 48, 62, erstrecken sich die Seitenflansche 59, 74, bezogen auf eine Längsachse L des Rades 32 in Außenrichtung, ausgehend von einem relativ geringeren Bereich an der Außenfläche 48, 62 derart, dass die Reifenkörper 34A, 34B gehalten werden. Die Längsachse L stellt dabei die Rotationsachse sowohl für den Radhauptkörper als auch für den Radzusatzkörper dar.

Wie besonders deutlich aus Fig. 3 hervorgeht, sind beide Reifenkörper 34A, 34B einheitliche, nicht luftgefüllte Reifen. Der erste Reifenkörper 34A wird nun im einzelnen beschrieben, wobei der andere zweite Reifenkörper 34B in gleicher Weise ausgebildet ist wie der erste Reifenkörper 34A. Der erste Reifen 34A hat ein Reifenäußeres, das eine innere Reifenfläche 76, eine äußere Reifenfläche 78, eine rechte Seitenfläche 80 eine linke Seitenfläche 82 und eine erste und zweite Vertiefung 84, 86 enthält, wobei die Vertiefungen 84, 86 sich ins Reifeninnere zwischen der inneren Reifenfläche 76 und den entsprechenden Seitenflächen 80, 82 erstrecken. Vorzugsweise bildet die äußere Reifenfläche 78 des ersten Reifens 34A die vollständige äußere Fläche des Radaufbaus 30, wie es auch im Ausführungsbeispiel dargestellt ist, so dass jeder Bereich der äußeren Reifenfläche 78 des Radaufbaus 30 bzw. die gesamte äußere Fläche des Radaufbaus 30 als Übertragungsfläche für eine reibschlüssige Verbindung zur Raupe 17 genutzt wird.

Die Vertiefungen 84, 86 im Reifen 34A definieren jeweilige zur Seite weisende bzw. ausgerichtete Stützflächen 88, 90. Die Stützfläche 88 grenzt an die Stützwand 58 des ersten Seitenflanschs 59 an. Eine ähnlich ausgebildete, zur entgegengesetzten Seite ausgerichtete Seitenfläche 90 des Reifenkörpers 34B grenzt an die Stützwand 72 des zweiten Seitenflanschs 74 an. Solch ein Angrenzen zwischen den Stützflächen 88, 90 der Reifenkörper 34A, 34B und den Stützwänden 58, 72 der Radkörper 36, 38 stabilisieren den Reifen 34A, 34B gegen seitliche Bewegungen relativ zum Rad 32. Eine ergänzende gegenseitige Stützfunktion der beiden Reifenkörper 34A durch entsprechende zueinander ausgerichtete linke und rechte Seitenflächen 80, 82 der Reifenkörper 34A und 34B, komplettieren die Stabilisierungselemente, durch welche seitliche Bewegungen des Reifens 34A, 34B gegenüber dem Rad 32 kontrolliert werden.

Mehrere Drähte 92, wie z.B. Stahldrähte, Nylondrähte, Kunststoffdrähte oder entsprechende Seile, sind nahe der inneren Reifenfläche 76 der Reifen 34A, 34B in diese eingebettet bzw. eingeformt. Derartige Drähte können aus Einzeldrähten, Strängen mit mehreren Drähten sowie aus miteinander verwebten Drahtelementen und/oder nichtgewebte florartige Drahtelemente bestehen.

Die Dehnungseigenschaften der Drähte 92 sind derart ausgewählt, dass eine Ausdehnung des Durchmessers der Reifenkörper 34A, 34B an der inneren Reifenfläche 76 begrenzt wird. Der Durchmesser des Drahtmaterials ist ausreichend gering, damit die Längsachse des Drahtes radial innerhalb der Außenkante der Seitenflansche 59, 74 liegt, so dass axiale Rückhaltekräfte der Stützwände 58, 72 radial außerhalb der Massenschwerpunkte der Drähte 92 wirksam sind und in Kombination mit dem gegenseitigen Wechselspiel zwischen Seitenflansch 59, 74 und Reifen 34A bzw. 34B, die Drähte 82 tendenziell radial nach innen zur Außenfläche 48 des Rades 32 gedrängt werden.

In Übereinstimmung mit einer solchen Ausbildung, ist die innere Reifenfläche 76 des Reifens 34A, 34B nicht in der Lage, sich über die äußeren Durchmesserbegrenzungen der Seitenflansche 59, 74 hinaus auszudehnen und die Seitenflansche 59, 74 halten den Reifen 34A, 34B wirkungsvoll in einer seitlich stabilen Lage auf dem Rad 32. Zu diesem Zweck kann vorzugsweise ein Drahtmaterial ausgewählt werden, wie es auch bei Reifen bekanntermaßen eingesetzt wird. Hierbei sind vorzugsweise Stahldrähte einzusetzen.

Insgesamt hindern das Streckvermögen des Reifenelastomers in Kombination mit den begrenzten Streckeigenschaften des Drahtmaterials den Reifen 34A, 34B effektiv daran, sich derart radial auszudehnen und den Durchmesser an der inneren Reifenfläche 76 so weit ansteigen zu lassen, dass der Reifen 34A, 34B in der Lage ist seitlich über einen der Seitenflansche 59, 74 und damit vom Rad 32 zu rutschen.

Im Zusammenhang damit, den Reifen 34A, 34B seitlich stabil auf dem Rad 32 zu halten, können die Werte für die Winkel α1 und α2 im Bereich von 45° bis 135° liegen. Unterhalb von 45° könnte der Grenzbereich für eine Tragfähigkeit der Stützwände 58, 72 erreicht sein. Oberhalb von 135° könnten die Stützwände 58, 72 bewirken, dass der Reifen während des Betriebes des Radaufbaus 30 über einen der Seitenflansche rutscht. Vorzugsweise betragen die Winkel α1, α2 ca. 60° bis ca. 120°. Weitere bevorzugte Winkel α1, α2 betragen ca. 75 bis ca. 105°. Die abgebildeten Winkel α1, α2 betragen 90°.

In einem anderen Ausführungsbeispiel (nicht gezeigt) können die Stützwände 58, 72 der Seitenflansche 59, 74 und die zur Seite ausgerichteten Stützflächen 88, 90 der Reifenkörper 34A, 34B mehrere verschiedenste aufeinander abgestimmte Kontaktflächen besitzen, mit denen die Reifenkörper 34A, 34B gezwungenermaßen durch die Seitenflansche 59, 74 festgehalten werden können.

Obwohl an der Kontaktfläche der Außenflächen 48, 62 der Radkörper 36, 38 und der inneren Reifenfläche 76 der Reifenkörper 34A, 34B ein Klebestoff verwendet werden kann und es in der Technik durchaus üblich ist, derartige Klebstoffe zu verwenden, ist es bei dieser Erfindung nicht notwendig Klebstoff einzusetzen. Vorzugsweise wird sogar kein Klebstoff verwendet.

Vielmehr werden zur Sicherung einer entsprechenden Kontaktfläche zwischen Reifen 34A, 34B und Radkörper 36, 38 sowohl geeignete, aufeinander abgestimmte Durchmesser für die innere Reifenfläche 76 der Reifenkörper 34A, 34B und für die Außenflächen 48, 62 der Radkörper 36, 38 als auch geeignete Materialien sowohl für die Reifen 34A, 34B als auch für die Radkörper 36, 38 ausgewählt. Derartige geeignete Grenzflächendurchmesser beinhalten eine Durchmesserdifferenz, in der der Durchmesser der inneren Reifenfläche 76 der Reifenkörper 34A, 34B um z.B. ca. -0,5 cm (-0,2 Zoll) kleiner bis ca. 0,1 cm (+0,04 Zoll) größer ist. Der maximale Durchmesserunterschied ist dabei abhängig von den radialen Dehnungseigenschaften des Reifens 34A, 34B, wie z.B. von der Durchmesseraufweitung. Wenn ein Presssitz vorgesehen ist, dann wird der Reifen 34A, 34B leicht gestreckt auf das Rad 32 aufgezogen, so dass dieser unter Spannung auf dem Rad 32 sitzt und ein fester Reibschluss geschaffen wird. Bei einer positiven Durchmesserdifferenz wird ein mäßiges Durchrutschen zwischen Reifen 34A, 34B und Rad 32 toleriert, wenn der Radaufbau 30 ohne Last oder unter leichter Last beansprucht wird.

Wie auch immer das Verhältnis der Durchmesser von Reifen 34 und Rad 32 ausgebildet ist, der kritische Zusammenhang besteht darin, dass der Reifen einen nicht zu lockerem Sitz aufweisen darf und nicht leicht vom Rad 32 geschoben werden kann, nachdem der zweite Seitenflansch 74 bzw. der Radzusatzkörper 38 befestigt wurde.

Die Reifenkörper 34A, 34B werden auf die Radkörper 36, 38 wie folgt montiert. Zuerst ist der Radzusatzkörper 38 vom Radhauptkörper 36 zu entfernen, bevor der Reifenkörper 34A aus Richtung der linken Seitenfläche 52 seitlich auf die Außenfläche 48 des äußeren Flanschs 44 des Radhauptkörpers 36 geschoben wird. Dabei wird der Reifen 34A so weit wie nötig gedehnt um der zwischen Reifen 34 und Radhauptkörper 36 vorliegenden Passung zu entsprechen bzw. sich dieser anzupassen. Der Reifen 34 wird entlang der Außenfläche 48 verschoben, bis die zur Seite ausgerichtete Stützfläche 88 des Reifens 34A an der Stützwand 58 des ersten Seitenflanschs 59 zur Anlage kommt, wobei sich zwischen dem ersten Seitenflansch 59 und der ersten Vertiefung 84 eine vollständige, oder im Wesentlichen vollständige Grenzflächenbindung einstellt.

Der Reifenkörper 34B wird auf gleiche Art und Weise auf die zweite Außenfläche 62 des Radzusatzkörpers 38 montiert. Die rechte Zusatzseitenfläche 66 des Radzusatzkörpers 38 wird dann angrenzend an die linke Seitenfläche 52 in Verbindung mit dem Radhauptkörper 36 gebracht. Mittels Schrauben 40, die durch den Radzusatzkörper 38 in den Radhauptkörper 36 geführt werden, wird der Radzusatzkörper 38 lösbar an den Radhauptkörper 36 montiert und gesichert. Die Schrauben werden entsprechend fest angezogen um den Radzusatzkörper 38 gegenüber dem Radhauptkörper 36 in einen starren Zustand zu bringen, so dass der Reifenzusatzkörper 38 als ein mit dem Radhauptkörper 36 einheitliches Bauteil wirken kann. Somit können Gewicht und andere Belastungen die auf eine Raupenlaufbahn 17 einwirken, die nunmehr breiter als der Radhauptkörper 36 ist, über eine größere Breite verteilt werden, als dies möglich wäre, wenn die Raupenlaufbahn lediglich auf einen Radhauptkörper 36 und nicht auf den Radzusatzkörper 38 angeordnet ist.

Nachdem der Radzusatzkörper 38 an den Radhauptkörper 36 montiert wurde, stützen sich die gegenüber angeordneten Seitenflansche 59, 74 und die zur Seite ausgerichteten Stützflächen 88, 90 gegenseitig ab und vermeiden seitliche Bewegungen der Reifenkörper 34A, 34B relativ zum Reifen 32, während die Drähte 92 eine unerwünschte radiale Ausdehnung der Reifenkörper 34A, 34B verhindern.

Obwohl die Reifenkörper 34A, 34B vorzugsweise nicht an die Radkörper 36, 38 geklebt sind, wirken Radkörper 36, 38 und Reifenkörper 34A, 34B dennoch als einheitliches Bauteil, wenn zwischen Raupe 17 und Radaufbau 30 eine Kraft übertragen wird. In derartigen Lastzuständen verursachen die durch die von der Raupe 17 auf die äußere Reifenfläche 78 der Reifenkörper 34A, 34B übertragenen Radialkräfte einen Reibschluss, der sich zwischen den Außenflächen 48, 62 der Radkörper 36, 38 und der inneren Reifenfläche 76 der Reifenkörper 34A, 34B einstellt. Ein Fachmann auf diesem Gebiet ist in der Lage, geeignete Kautschuks oder Elastomere wie z.B. bestimmte Polyurethanpolymere für den Einsatz im Reifen 34A, 34B auszuwählen, so dass gewünschte Elastizitätseigenschaften zur Abdämpfung von Stößen, die sonst vom Boden in das Fahrzeug geleitet würden, und gewünschte Reibeigenschaften zwischen Reifen 34A, 34B und Rad 32 sowie Reifen 34A, 34B und Raupe 17 erzielt werden.

Entsprechend der oben beschriebenen Installationsprozedur, werden die Reifenkörper 34A, 34B entfernt, indem die Schrauben 40 gelöst werden und der Radzusatzkörper 38 vom Radhauptkörper entfernt wird. Die Reifenkörper 34A, 34B werden seitlich sowohl von dem Radhauptkörper 36 als auch von dem Radzusatzkörper 38, geschoben. Anschließend können neue Reifenkörper 34A, 34B auf den Radhauptkörper 36 und dem Radzusatzkörper 38 montiert werden. Dazu wird der Radzusatzkörper 38 erneut an den Radhauptkörper montiert und gesichert.

Erfindungsgemäße Radaufbauten 30, wie oben beschrieben, eignen sich für den Einsatz bei beliebigen Raupenlaufwerken, insbesondere für Antriebsradaufbauten, Laufradaufbauten, mittlere Leitradaufbauten und Spannradaufbauten.

Bezugnehmend auf Fig. 3 und auf die Vertiefungen 84, 86 an den Stützwänden 88, 90 der Reifenkörper 34A, 34B sind in dieser Erfindung viele Gestaltungsmöglichkeiten hinsichtlich einer Ausbildung der aufeinander einwirkenden Seitenflächen an den Seiten der Reifenkörper 34A, 34B realisierbar, die in der Nähe der Mitte des Radaufbaus 30 zum Tragen kommen. Dementsprechend können die gezeigten Vertiefungen 84, 86 in der Mitte des Radaufbaus 30 auch entfallen, so dass die Seitenflächen 80, 82 in der Mitte des Radaufbaus 30 sich über die gesamte Dicke der Reifenkörper 34A, 34B zwischen der inneren Reifenfläche 76 und der äußeren Reifenfläche 78 gegenseitig abstützen.

Des Weiteren formen, mit Bezugnahme auf Fig. 3, die linke Vertiefung 86 an der linken Seite des Reifenkörpers 34A zusammen mit der rechten Vertiefung 84 an der rechten Seite des Reifenkörpers 34B einen offenen, ringförmigen und durchgehenden Freiraum 94, der sich über den gesamten Umfang des Radaufbaus zwischen den Außenflächen 48, 62 des Rades 32 und den weiter außen angeordneten Flächen der Vertiefungen 84, 86 erstreckt. In einigen Ausführungsformen kann ein Füllring 96, wie er mit gestrichelter Linie in Fig. 3 dargestellt ist, optional als Füllmittel in den Freiraum 94 eingebracht werden, um ein Einsinken des Reifens 34A, 34B in einen solchen Freiraum zu vermeiden. Zu diesem Zweck wird der Füllring 96 im Wesentlichen entsprechend dem Freiraum 94 bemessen und ausgebildet.

Bei Verwendung eines Füllrings 96 kann dieser aus verschiedensten Materialien hergestellt werden. Normalerweise dient ein solcher Füllring 96 dazu, das Zusammendrücken der Reifenkörper 34A, 34B zu verhindern, weshalb ein relativ steifes Material wie z. B. Stahl oder ein anderes Metall zur Herstellung des Füllrings 96 eingesetzt wird. In anderen Ausführungen können auch bestimmte Polymere effektiv eingesetzt werden, wie z. B. der gleiche Elastomer, der auch im Wesentlichen zur Herstellung des Reifenkörpers 34A, 34B eingesetzt wird. Es können aber auch andere Polymere, Metalle, Keramiken oder andere geeignete Materialien als Füllmittel für den Freiraum 94 eingesetzt werden.

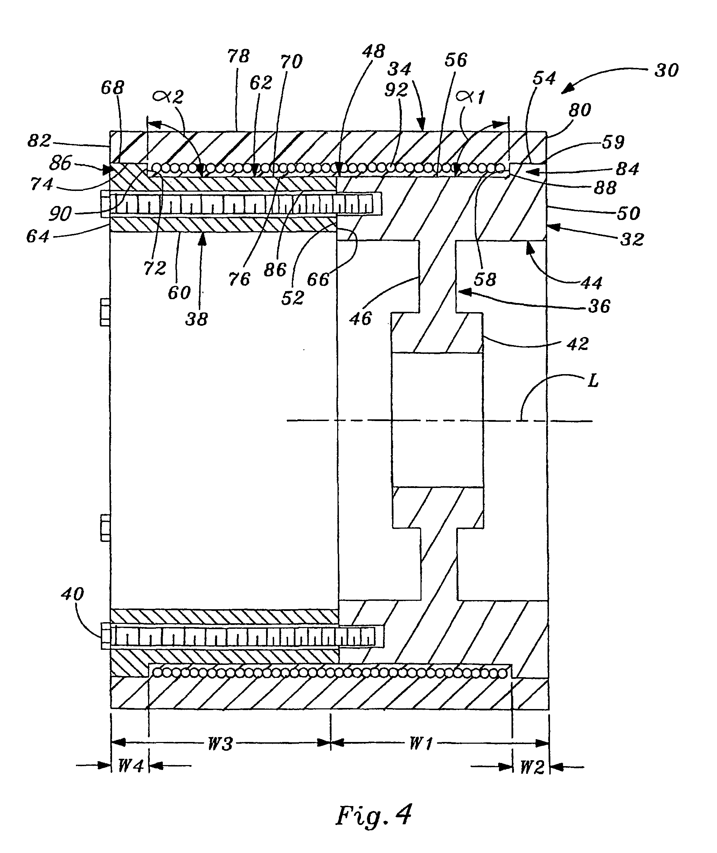

In einer weiteren Ausgestaltung der Erfindung, gemäß Fig. 4, werden die beiden gleichartigen Reifenkörper 34A, 34B aus Fig. 3 durch einen einteiligen Reifenkörper 34 ersetzt, der sich über die gesamte vom Reifen 34 überdeckte Breite des Rades 32 erstreckt. Ein derartiger Reifen 34, sei es ein einteiliger Reifen 34, ein Reifen aus zwei Reifenkörpern 34A, 34B oder ein Reifen mit mehr als zwei Reifenkörpern, kann sich über die gesamte Breite des Rades 32, über die gesamte Breite des Rades 32 und darüber hinaus, sowie über weniger als die gesamte Breite des Rades 32 erstrecken. In bevorzugten Ausgestaltungen der Erfindung entspricht die Breite des Reifens 34 der Breite des Rades 32, wobei die gesamte Breite des Reifens 34 durch die Außenflächen 48, 62 des Rades 32 abgestützt wird, während der Reifen 34 über die gesamte Breite des Rades 32 im Raupenlaufwerk wirksam ist.

In jedem Fall dient die durch den Radzusatzkörper 38 hervorgerufene Verstärkung und Unterstützung dazu, in der gegenüber Standardausrüstungen breiteren Raupe 17 eine höhere Gleichförmigkeit in der Druckverteilung entlang der Raupenbreite zu erzielen, als bei einem Raupenlaufwerk 16 mit breiterer Raupe 17 ohne Radzusatzkörper 38 erzielt werden kann.

Entsprechend Fig. 4, bei der ein einteiliger Reifenkörper 34A verwendet wird, stehen vorzugsweise beide Seitenflansche 59, 74 mit den Seitenflächen 80, 82 des Reifens 34 und optional, wie in Fig. 4 dargestellt, mit den zur Seite ausgerichteten Stützflächen 88, 90 und den damit verbundenen Vertiefungen 84, 86 in Wechselwirkung.

Auch wenn die Erfindung lediglich anhand der oben dargestellten Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen, wie sie durch die Ansprüche definiert sind.

## Patentansprüche

1. Radaufbau für einen Raupenantrieb, wobei der Radaufbau (30) enthält:
a) ein Rad (32), welches enthält:
(i) einen Radhauptkörper (36) mit einer ersten Drehachse, einem inneren Flansch (42), der eine zentrale Öffnung aufweist, mit der der Radhauptkörper (36) an eine Achse zur Rotation des Rades (32) um eine solche Achse und um die erste Drehachse montierbar ist, einem äußeren Flansch (44), der gegenüberliegende rechte und linke Seitenflächen (50, 52), eine erste Breite W1 der äußeren Fläche zwischen der rechten und linken Seitenfläche (50, 52), eine erste Innenfläche und eine erste Außenfläche (48) aufweist, und einem Steg (46), der den inneren und äußeren Flansch (42, 44) miteinander verbindet, wobei der äußere Flansch (44) sich über die gesamte erste Breite W1 zwischen der rechten und linken Seitenfläche (50, 52) erstreckt,
(ii) einen ringförmig ausgebildeten Radzusatzkörper (38), der eine zweite Innenfläche (60), eine zweite Außenfläche (62), gegenüberliegende linke und rechte Zusatzseitenflächen (64, 66) sowie eine äußere Fläche enthält, die sich zwischen der linken und rechten Zusatzseitenfläche (64, 66) erstreckt und eine zweite Breite W3 aufweist, wobei der Radzusatzkörper (38) mit der rechten Zusatzseitenfläche (66) an die linke Seitenfläche (52) des Radhauptkörpers (36) lösbar montierbar ist, so dass dort eine Verbindungsstelle geschaffen wird, und durch die Kombination aus den Breiten W1 und W3 des Radhauptkörpers (36) bzw. des Radzusatzkörpers (38) eine Gesamtbreite der äußeren Fläche des Rades (32) definiert wird, wobei die Gesamtbreite wenigstens ca. 30% größer ist als die erste Breite W1 und wobei der Radzusatzkörper (38) eine zweite Drehachse besitzt, die axial mit der ersten Drehachse fluchtet,
(iii) wobei die erste und zweite Außenfläche (48, 62) des Radhauptkörpers (36) bzw. des Radzusatzkörpers (38) einen im Wesentlichen gemeinsamen Durchmesser besitzen und miteinander kombiniert eine äußere Fläche des Rades (32) definieren, mit einem mittleren Bereich und sich gegenüberliegenden Endbereichen an der außenliegenden Seitenfläche (50) des Radhauptkörpers (36) und an der außenliegenden Zusatzseitenfläche (64) des Radzusatzkörpers (38),
b) einen Reifen (34) mit einem oder mehreren Reifenkörpern (34A, 34B), wobei der Reifen (34) eine Außenkontur enthält, die eine innere Reifenfläche(76), eine äußere Reifenfläche (78) und eine rechte und linke Seitenfläche (80, 82) aufweist, welche sich im Wesentlichen von der äußeren Reifenfläche (78) zur inneren Reifenfläche (76) erstrecken, des Weiteren mehrere Drähte (92) enthalten sind, die nahe der inneren Reifenfläche (76) des Reifens (34) angeordnet und in ein elastomeres Reifenmaterial eingebettet sind, wobei die äußere Fläche des Rades (78) die innere Reifenfläche (76) des Reifens aufnimmt und eine Rad-Reifen-Grenzfläche definiert wird,
c) einen ersten Seitenflansch (59) an einer Seitenfläche (50) des Radhauptkörpers (36), wobei der erste Seitenflansch (59) eine erste Stützwand (58) formt,
d) einen zweiten Seitenflansch (74) an einer Zusatzseitenfläche (64) des Radzusatzkörpers (38), wobei sich der zweite Seitenflansch (74) ausgehend von der zweiten Außenfläche (62) des Rades (32) zu einem weiter außen liegenden Rand innerhalb der äußeren Reifenfläche (78) des Reifens (34) erstreckt und der zweite Seitenflansch (74) eine zweite Stützwand (72) formt, die ausgehend von der linken Zusatzseitenfläche (64) nach innen gerichtet ist.

2. Radaufbau nach Anspruch 1, **dadurch gekennzeichnet, dass** sich der erste Seitenflansch (59) ausgehend von der Außenfläche (48) des Rades (32) zu einem weiter außen liegenden Rand innerhalb der äußeren Reifenfläche (78) des Reifens (34) erstreckt.

3. Radaufbau nach Anspruch 1 oder 2, **dadurch gekennzeichnet, dass** die erste und zweite Außenfläche (48, 62) des Radhauptkörpers (36) bzw. des Radzusatzkörpers (38) beidseits von der Verbindungsstelle einen im Wesentlichen konstanten Außendurchmesser besitzt, wobei der mittlere Bereich einen mit einem relativ kleineren Durchmesser versehenen Kleindurchmesserbereich (56, 70) darstellt und die sich gegenüberliegenden Endbereiche einen mit einem relativ größeren Durchmesser versehenen Großdurchmesserbereich (54, 68) darstellen, derart, dass der erste Seitenflansch (59) an der rechten Seitenfläche (50) innerhalb des äußeren Flanschs (44) des Rades (32) liegt und einen größeren zweiten Durchmesser als den kleineren ersten Durchmesser aufweist, und dass die vom ersten Seitenflansch (59) geformte erste Stützwand (58) in Richtung der Mitte der äußeren Fläche des Rades (32) gerichtet ist.

4. Radaufbau nach Anspruch 3, **dadurch gekennzeichnet, dass** der Betragsunterschied zwischen dem ersten und dem zweiten Durchmesser größer ist als ein radiales Ausdehnungsvermögen der Kombination aus Drähten (92) und elastomerem Material im Reifen (34), so dass seitliche Verschiebungen des Reifens (34) auf dem Rad (32) bei montiertem Radzusatzkörper (38) verhindert werden.

5. Radaufbau nach einem der vorhergehenden Ansprüche, **dadurch gekennzeichnet, dass** die erste und zweite Stützwand (58, 72) des ersten bzw. zweiten Seitenflanschs (59, 74) die rechte bzw. linke Seitenfläche (80, 82) des Reifens (34) abstützen, so dass effektiv seitliche Bewegungen des Reifens (34) bei an den Radhauptkörper (36) montierten Radzusatzkörper (38) verhindert werden, und dass bei Demontage des Radzusatzkörpers (38) vom Radhauptkörper (36) die Abstützfunktion aufgehoben wird, derart, dass der Reifen (34) seitlich vom Rad (32) gelöst werden kann und anschließend ein neuer Reifen (34) auf die äußere Fläche des Rades (32) aufgezogen werden kann, gefolgt von einem erneuten Montieren des Radzusatzkörpers (38) an den Radhauptkörper (36).

6. Radaufbau nach einem der vorhergehenden Ansprüche, **dadurch gekennzeichnet, dass** der Reifen (34) zwischen der inneren Reifenfläche (76) und wenigstens einer der beiden Seitenflächen (80, 82) des Reifens (34) eine Vertiefung (84, 86) aufweist, wobei die Vertiefung (84, 86) eine zur Seite ausgerichtete Stützfläche (88, 90) formt und der erste bzw. zweite Seitenflansch (59, 74) mit der ersten bzw. zweiten Stützwand (58, 72) die Stützfläche (88, 90) abstützt, wodurch seitliche Bewegungen des Reifens (34) relativ zum Rad (32) verhindert werden.

7. Radaufbau nach einem der vorhergehenden Ansprüche, **dadurch gekennzeichnet, dass** der Reifen (34) zwischen der inneren Reifenfläche (76) und den beiden Seitenflächen (80, 82) des Reifens (34) eine erste und eine zweite Vertiefung (84, 86) aufweist, wobei die Vertiefungen (84, 86) eine erste bzw. eine zweite zur Seite ausgerichtete Stützfläche (88, 90) formen und der erste und der zweite Seitenflansch (59, 74) mit der ersten bzw. der zweiten Stützwand (58, 72) die Stützflächen (88, 90) der Vertiefungen (84, 86) abstützen, wodurch seitliche Bewegungen des Reifens (34) relativ zum Rad (32) verhindert werden.

8. Radaufbau nach einem der vorhergehenden Ansprüche, **dadurch gekennzeichnet, dass** die äußere Reifenfläche (78) über die gesamte Breite des Radaufbaus (30) die Außenfläche des Radaufbaus (30) bildet.

9. Radaufbau nach einem der vorhergehenden Ansprüche, **dadurch gekennzeichnet, dass** der Reifen (34) frei von Klebestoffen auf der Rad-Reifen-Grenzfläche ist.

10. Radaufbau nach einem der vorhergehenden Ansprüche, **dadurch gekennzeichnet, dass** der Radzusatzkörper (38) Bohrungen enthält, die sich über die gesamte Breite W3 durch den Radzusatzkörper (38) erstrecken, wobei die Bohrungen Befestigungsmittel (40) aufnehmen, mit denen der Radzusatzkörper (38) an den Radhauptkörper (36) lösbar befestigbar ist.

11. Radaufbau nach einem der vorhergehenden Ansprüche, **dadurch gekennzeichnet, dass** der zweite Seitenflansch (74) ein Bestandteil des Radzusatzkörpers (38) ist und angrenzend an der äußeren Zusatzseitenfläche (64) des Radzusatzkörpers (38) einen relativ zur zweiten Außenfläche (62) des Radzusatzkörpers (38) größeren Zusatzgroßdurchmesserbereich (68) enthält.

12. Radaufbau nach einem der vorhergehenden Ansprüche, **dadurch gekennzeichnet, dass** der erste Seitenflansch (59) ein Bestandteil des Radhauptkörpers (36) ist und dass der zweite Seitenflansch (74) ein Bestandteil des Radzusatzkörpers (38) ist, wobei erster und zweiter Seitenflansch (59, 74) angrenzend an die außenliegende Seitenfläche (50) des Radhauptkörpers (38) bzw. die außenliegende Zusatzseitenfläche (64) des Radzusatzkörpers (38) einen relativ zur Außenfläche (48, 62) der Radkörper (36, 38) größeren Großdurchmesserbereich (54, 68) enthält.

13. Raupenantrieb mit einer Antriebsmaschine (18), einer Raupe (17), wobei die Raupe (17) um eine Mehrzahl von Rädern (24, 26, 28) montiert ist, und mit einem eine Antriebskraft von der Antriebsmaschine (18) zu wenigstens einem Rad (24, 26, 28) übertragenden Antriebsstrang (20), wobei wenigstens eines der Mehrzahl der Räder (24, 26, 28) einen Radaufbau (30) entsprechend der Ansprüche 1 bis 12 enthält.

14. Raupenfahrzeug mit einem Rahmen (12), einer Antriebsmaschine (18), einem Raupenlaufwerk (16) und einem Antriebsstrang (20), der eine Antriebskraft von der Antriebsmaschine (18) zum Raupenlaufwerk (16) überträgt, wobei das Raupenlaufwerk (16) eine Raupe (17) und eine Mehrzahl von Rädern (24, 26, 28) enthält, um die die Raupe (17) montiert ist und wobei wenigstens eines der Räder (24, 26, 28) einen Radaufbau (30) entsprechend der Ansprüche 1 bis 12 enthält.

15. Raupenfahrzeug nach Anspruch 14, **dadurch gekennzeichnet, dass** der Radaufbau (30) ein mittleres Leitrad (28) oder ein führendes Laufrad (26) darstellt.

## Claims

1. A wheel assembly for a track drive, wherein the wheel assembly (30) includes:
1) a wheel (32), which includes:
(1) a main wheel body (36) with a first axis of rotation, an inner flange (42) which has a central opening, with which the main wheel body (36) can be mounted on an axle for rotation of the wheel (32) about such an axle and about the first axis of rotation, an outer flange (44) which has opposite right and left side faces (50, 52), a first width W1 of the outer face between the right and left side faces (50, 52), a first inner face and a first outer face (48), and a web (46) which connects together the inner and outer flanges (42, 44), wherein the outer flange (44) extends over the whole first width W 1 between the right and left side faces (50, 52),
(2) an annularly shaped supplementary wheel body (38) which includes a second inner face (60), a second outer face (62), opposite left and right supplementary side faces (64, 66) as well as an outer face which extends between the left and right supplementary side faces (64, 66) and has a second width W3, wherein the supplementary wheel body (38) can be releasably fitted with the right supplementary side face (66) on the left side face (52) of the main wheel body (36), so that a joint is formed there, and an overall width of the outer face of the wheel (32) is defined by the combination of the first and second widths W 1 and W3 of the main wheel body (36) and the supplementary wheel body (38) respectively, wherein the overall width is at least about 30% greater than the first width W1 and wherein the supplementary wheel body (38) has a second axis of rotation which coincides axially with the first axis of rotation,
(3) wherein the first and second outer faces (48, 62) of the main wheel body (36) and the supplementary wheel body (38) respectively have substantially the same diameter and in combination with one another define an outer face of the wheel (32) with a middle region and opposite end regions at the outer side face (50) of the main wheel body (36) and at the outer supplementary side face (64) of the supplementary wheel body (38),
2) a tyre (34) with one or more tyre bodies (34A, 34B), wherein the tyre (34) has an outer contour which comprises an inner tyre face (76), an outer tyre face (78) and right and left side faces (80, 82) which extend essentially from the outer tyre face (78) to the inner tyre face (76), furthermore a plurality of wires (92) are included, being disposed near the inner tyre face (76) of the tyre (34) and embedded in an elastomeric tyre material, wherein the outer face (78) of the wheel receives the inner face (76) of the tyre and a wheel-tyre interface is defined,
3) a first side flange (59) at a side face (50) of the main wheel body (36), wherein the first side flange (59) forms a first abutment wall (58),
4) a second side flange (74) at a supplementary side face (64) of the supplementary wheel body (38), wherein the second side flange (74) extends from the second outer face (62) of the wheel (32) to an edge lying further out, inside the outer tyre face (78) of the tyre (34) and the second side flange (74) forms a second abutment wall (72) which is directed inwards from the left supplementary side face (64).

2. A wheel assembly according to claim 1, **characterized in that** the first side flange (59) extends from the outer face (48) of the wheel (32) to an edge lying further out inside the outer tyre face (78) of the tyre (34).

3. A wheel assembly according to claim 1 or 2, **characterized in that** the first and second outer faces (48, 62) of the main wheel body (36) and the supplementary wheel body (38) respectively have a substantially constant outer diameter on the two sides of the joint, wherein the middle region exhibits a small diameter region (56, 70) provided with a smaller relative diameter and the opposed end regions represent large diameter regions (54, 68) provided with a larger relative diameter, such that the first side flange (59) lies at the right side face (50) inside the outer flange (44) of the wheel (32) and has a greater second diameter than the smaller first diameter, and **in that** the first abutment wall (58) formed by the first side flange (59) is directed in the direction of the centre of the outer surface of the wheel (32).

4. A wheel assembly according to claim 3, **characterized in that** the difference in amount between the first and the second diameters is larger than the capability for radial expansion of the combination of wires (92) and elastomeric material in the tyre (34), so that lateral displacements of the tyre (34) on the wheel (32) with the supplementary wheel body (38) fitted are prevented.

5. A wheel assembly according to any of the preceding claims, **characterized in that** the first and second abutment walls (58, 72) of the first and second side flanges (59, 74) respectively abut the right and left side faces (80, 82) of the tyre (34) respectively, so that lateral movements of the tyre (34) are effectively prevented with the supplementary wheel body (38) fitted on the main wheel body (36), and **in that**, on removing the supplementary wheel body (38) from the main wheel body (36), the abutment function is removed, so that the tyre (34) can be removed sideways from the wheel (32) and a new tyre (38) can then be drawn on to the outer surface of the wheel (32), followed by fitting the supplementary wheel body (38) again on the main wheel body (36).

6. A wheel assembly according to any of the preceding claims, **characterized in that** the tyre (34) has a recess (84, 86) between the inner tyre face (76) and at least one of the two side faces (80, 82) of the tyre (34), wherein the recess (84, 86) forms an abutment face (88, 90) directed towards the side and the abutment walls (58, 72) of the first and second side flanges (59, 74) abut the side faces (88, 90) respectively, whereby lateral movements of the tyre (34) relative to the wheel (32) are prevented.

7. A wheel assembly according to any of the preceding claims, **characterized in that** the tyre (34) has first and second recesses (84, 86) between the inner tyre face (76) and the two side faces (80, 82) of the tyre (34), wherein the recesses (84, 86) form first and second abutment faces (88, 90) respectively, directed sideways and the first and second abutment walls (58, 72) of the side flanges (59, 74) respectively abut the abutment faces (88, 90) of the recesses (84, 86, whereby lateral movements of the tyre (34) relative to the wheel (32) are prevented.

8. A wheel assembly according to any of the preceding claims, **characterized in that** the outer tyre surface (78) forms the outer face of the wheel assembly (30) over the whole width of the wheel assembly (30).

9. A wheel assembly according to any of the preceding claims, **characterized in that** the tyre (34) is free from adhesive at the wheel-tyre interface.

10. A wheel assembly according to any of the preceding claims, **characterized in that** the supplementary wheel body (38) has bores which extend through the supplementary wheel body (38) over the whole width W3, wherein the bores receive fixing elements (40) with which the supplementary wheel body (38) can be fixed releasably on the main wheel body (36).

11. A wheel assembly according to any of the preceding claims, **characterized in that** the second side flange (74) is a component of the supplementary wheel body (38) and has a greater supplementary size diameter region (68) adjoining the outer supplementary side face (64) of the supplementary wheel body (38) relative to the second outer face (62) of the supplementary wheel body (38).

12. A wheel assembly according to any of the preceding claims, **characterized in that** the first side flange (59) is a component of the main wheel body (36) and **in that** the second side flange (74) is a component of the supplementary wheel body (38), wherein the first and second side flanges (59, 74) have a greater large diameter region (54, 68) adjoining the outer lying side face (50) of the main wheel body (36) and the outer lying supplementary side face (64) of the supplementary wheel body (38) respectively, relative to the outer face (48, 62) of the wheel bodies (36, 38).

13. A track drive with a drive engine (18), a track (17), wherein the track (17) is mounted around a plurality of wheels (24, 26, 28), and with a drive train (20) transmitting drive power from the drive engine (18) to at least one wheel (24, 26, 28), wherein at least one of the plurality of wheels (24, 26, 28) includes a wheel assembly (30) corresponding to claims 1 to 12.

14. A tracked vehicle with a frame (12), a drive engine (18), a track drive mechanism (16) and a drive train (20) which transmits drive power from the drive engine (18) to the track drive mechanism (16), wherein the track drive mechanism (16) includes a track (17) and a plurality of wheels (24, 26, 28) around which the track (17) is mounted and wherein at least one of the wheels (24, 26, 28) includes a wheel assembly (30) corresponding to claims 1 to 12.

15. A tracked vehicle according to claim 14, **characterized in that** the wheel assembly (30) involves a middle guide wheel (28) or a leading running wheel (26).

## Revendications

1. Structure de roue pour un entraînement à chenille, dans laquelle la structure de roue comprend :
a) une roue (32) comportant :
(i) un corps principal de roue (36) comportant un premier axe de rotation, un flasque intérieur (42) présentant une ouverture centrale et avec lequel le corps principal de roue (36) peut être monté sur un axe en vue de la rotation de la roue (32) autour de cet axe et autour du premier axe de rotation, un flasque extérieur (44) qui présente :
des faces latérales droite et gauche opposées (50, 52), une première largeur W1 du flasque extérieur entre les faces latérales droite et gauche (50, 52) et une première face intérieure et une première face extérieure (48) et une entretoise (46) qui relie l'un avec l'autre les flasques intérieur et extérieur (42, 44),
le flasque extérieur (44) s'étendant sur la totalité de la première largeur W1 entre les faces droite et gauche (50, 52) ;
(ii) un corps additionnel de roue (38) de forme annulaire comportant une seconde face intérieure (60), une seconde face extérieure (62), des faces latérales additionnelles gauche et droite opposées (64, 66) ainsi qu'une face extérieure qui s'étend entre les faces latérales additionnelles gauche et droite (64, 66) et une seconde largeur W3, le corps additionnel de roue (38) pouvant être monté amovible avec la face additionnelle droite (66) contre la face latérale gauche (52) du corps principal de roue (36), d'une manière telle que soit créé un emplacement de liaison et que, par la combinaison des largeurs W1 et W3 du corps principal de roue (36) et du corps additionnel de roue (38), soit définie une largeur totale de la face extérieure de la roue (32), la largeur totale étant d'au moins environ 30% supérieure à la première largeur W1, et le corps additionnel de roue (38) possédant un second axe de rotation qui est aligné axialement avec le premier axe de rotation ;
(iii) la première et la seconde faces extérieures (48, 62) du corps principal de roue (36) et du corps additionnel de roue (38) possédant un diamètre pratiquement commun et, combinées l'une à l'autre, définissant une face extérieure de la roue (32) présentant une zone centrale et des zones terminales opposées contre la face latérale située à l'extérieur (50) du corps principal de roue (36) et contre la face latérale additionnelle (64) située à l'extérieur du corps additionnel de roue (38),
b) un pneu (34) se composant d'un ou plusieurs corps de pneu (34A, 34B), le pneu (34) comportant un contour extérieur présentant une face intérieure de pneu (76), une face extérieure de pneu (78) et des face latérales droite et gauche (80, 82) qui s'étendent pratiquement depuis la face extérieure de pneu (78) jusqu'à la face intérieure de pneu (76) et qui, au surplus, contiennent plusieurs fils (92) qui sont disposés au voisinage de la face interne de pneu (76) du pneu (34) et qui sont noyés dans un matériau élastomère pour pneus, la face extérieure de roue (78) accueillant la face intérieure de pneu (76) du pneu et définissant une interface roue / pneu ;
c) un premier flasque latéral (59) contre une face latérale (50) du corps principal de roue, le premier flasque latéral (59) formant une première cloison d'appui (58) ;
d) un second flasque latéral (74) contre une face latérale additionnelle (64) du corps additionnel de roue (38), le second flasque latéral (74) s'étendant, en partant de la seconde face extérieure (62) de la roue (32) jusqu'à un bord situé plus vers l'extérieur dans l'intérieur de la face extérieure de pneu (78) du pneu (34) et le second flasque latéral (74) formant une seconde cloison d'appui (72) qui, en partant de la face latérale additionnelle gauche (64), est orientée vers l'intérieur.

2. Structure de roue selon la revendication 1, **caractérisée en ce que** le premier flasque latéral additionnel (59) s'étend, en partant de la face extérieure (48) de la roue (32) jusqu'à un bord situé plus vers l'extérieur dans l'intérieur de la face extérieure de pneu (78) du pneu (34).

3. Structure de roue selon la revendication 1 ou 2, **caractérisée en ce que** la première et la seconde face extérieures (48, 62) du corps principal de roue (36) et du corps additionnel de roue (38) possèdent sur leurs deux côtés de l'emplacement de liaison un diamètre extérieur pratiquement constant, la zone centrale représentant une zone de petit diamètre (56, 70) prévue avec un diamètre relativement petit, et les zones terminales opposées représentant une zone de grand diamètre (54, 68) prévue avec un diamètre relativement grand, de manière telle que le premier flasque latéral (59) soit situé contre la face latérale droite (50) de l'intérieur du flasque extérieur (44) de la roue (32) et présente un second diamètre plus grand que le premier diamètre plus petit et que la première cloison d'appui (58) formée à partir du premier flasque latéral (59) soit orientée dans la direction du milieu de la face extérieure de la roue (32).

4. Structure de roue selon la revendication 3, **caractérisée en ce que** la différence de dimension entre le premier et le second diamètres est supérieure à une capacité d'étirement radial de la combinaison des fils (92) et du matériau élastomère dans le pneu (34) de manière telle que soient empêchés des déplacements latéraux du pneu (34) sur la roue (32) dans le corps additionnel de roue (38) à l'état monté.

5. Structure de roue selon l'une des revendications précédentes, **caractérisée en ce que** la première et la seconde cloisons d'appui (58, 72) du premier et du second flasques latéraux (59, 74) retiennent les faces latérales droite ou gauche (80, 82) du pneu (34) de sorte que soient empêchés efficacement des déplacements latéraux du pneu (34) sur le corps additionnel de roue (38) à l'état monté sur le corps de roue principal (36) et que, lors du démontage du corps additionnel de roue (38) du corps principal de roue (36), la fonction d'appui soit annulée, de sorte que le pneu peut être libéré latéralement de la roue (32) et qu'ensuite un nouveau pneu (34) peut être mis en place sur la face extérieure de la roue (32), suivi d'un nouveau montage de corps additionnel de roue (38) sur le corps principal de roue (36).

6. Structure de roue selon l'une des revendications précédentes, **caractérisée en ce que** le pneu (34) présente entre la face intérieure de pneu (76) et au moins l'une des faces latérales (80, 82) du pneu (34) un renfoncement (84, 86), le renfoncement (84, 86) formant une surface d'appui (88, 90) orientée vers le côté et le premier ou le second flasques latéraux (59, 74) s'appuient sur la surface d'appui (88, 90) par la première ou la seconde cloison d'appui (58, 72) de manière telle que soient empêchés des déplacements du pneu (34) par rapport à la roue (32).

7. Structure de roue selon l'une des revendications précédentes, **caractérisée en ce que** le pneu (34) présente, entre la face intérieure de pneu (76) et les deux faces latérales (80, 82) du pneu (34), un premier et un second renfoncements (84, 86), les renfoncements (84, 86) formant une première et une seconde faces d'appui (88, 90) dirigées vers le côté, et le premier et le second flasques latéraux (59, 74) s'appuyant sur les faces d'appui (88, 90) des renfoncements (84, 86) par la première ou la seconde cloison d'appui (58, 72) de manière telle que soient empêchés des déplacements latéraux du pneu par rapport à la roue (32).

8. Structure de roue selon l'une des revendications précédentes, **caractérisée en ce que** la face extérieure de pneu (78) constitue la face extérieure de la structure de roue (30) sur toute la largeur de la structure de roue (30).

9. Structure de roue selon l'une des revendications précédentes, **caractérisée en ce que** le pneu (34) est exempt d'adhésif à l'interface roue / pneu.

10. Structure de roue selon l'une des revendications précédentes, **caractérisée en ce que** le corps additionnel de roue (38) comporte des alésages qui s'étendent à travers toute la largeur W3 du corps additionnel de roue (38), les alésages accueillant des moyens de fixation (40) au moyen desquels le corps additionnel de roue (38) peut être fixé détachable au corps principal de roue (36).

11. Structure de roue selon l'une des revendications précédentes, **caractérisée en ce que** le second flasque latéral (74) représente un élément constitutif du corps additionnel de roue (38) et présente, contiguë à la face latérale additionnelle extérieure (64) du corps additionnel de roue (38), une zone additionnelle de grand diamètre (68) plus importante par rapport à la seconde face extérieure (62) du corps additionnel de roue (38).

12. Structure de roue selon l'une des revendications précédentes, **caractérisée en ce que** le premier flasque latéral (59) représente un élément constitutif du corps principal de roue (36) et **en ce que** le second flasque latéral (74) représente un élément constitutif du corps additionnel de roue (38), le premier et le second flasques latéraux (59, 74) présentant, contiguë à la face (50) située à l'extérieur du corps principal de roue (38) ou à la face latérale additionnelle située à l'extérieur (64) du corps additionnel de roue (38), une zone de grand diamètre (54, 68) plus importante par rapport à la face extérieure (48, 62) du corps de roue (36, 38).

13. Entraînement à chenille comprenant une machine d'entraînement (18), une chenille (17), la chenille étant montée autour d'une pluralité de roues (24, 26, 28) et un arbre d'entraînement allant depuis la machine d'entraînement jusqu'à au moins l'une de la pluralité de roues (24, 26, 28) par l'intermédiaire d'une chaîne cinématique (20), au moins l'une de la pluralité de roues (24, 26, 28) comportant une structure de roue (30) conforme aux revendications 1 à 12.

14. Véhicule à chenille comprenant un châssis (12), une machine d'entraînement (18), une structure à chenille (16) et une chaîne cinématique d'entraînement (20) qui transfère une force d'entraînement depuis la machine d'entraînement (18) jusqu'à la structure à chenille (16), la structure à chenille (16) se composant d'une chenille (17) et d'une pluralité de roues (24, 26, 28) autour desquelles la chenille (17) est montée, au moins une des roues (24, 26, 28) comportant une structure de roue (30) conforme aux revendications 1 à 12.

15. Véhicule à chenille selon la revendication 14, **caractérisé en ce que** la structure de roue (30) comporte une roue de renvoi intermédiaire (28) ou une roue porteuse de guidage (26).
